# EUROPEAN PATENT SPECIFICATION

(11) **EP 2 392 872 B1**
(45) Date of publication and mention of the grant of the patent: **06.05.2015**
(21) Application number: 11425146.5
(22) Date of filing: 01.06.2011
(51) Int. Cl.: F24H 1/12

(54) **Economizer boiler for generating hot water and/or vapour**
Energiesparender Boiler zur Erzeugung von Warmwasser und/oder Dampf
Chaudière économique pour la production d'eau chaude et/ou de la vapeur

(30) Priority: 03.06.2010 IT VI20100155
(43) Date of publication of application: 07.12.2011
(73) Proprietor: HT S.p.A., 31058 Susegana (TV) (IT)
(72) Inventor: Dall'Anese, Costante, 31058 Susegana (TV) (IT)
(74) Representative: Santi, Filippo

(56) References cited:
- EP-A1- 1 138 235
- DE-U1-202007 012 762
- FR-A- 1 283 669
- FR-A1- 2 595 137
- US-B1- 6 321 036

## Description

The current invention relates to an economizer boiler for generating hot water and/or vapour, suitable to be used, in preferred though not exclusive way, in coffee machines for espresso, cappuccino or more.

Notoriously, some household appliances, such as for instance coffee machines, water boilers, dishwashers, irons, and, more generally, industrial equipment which, in order to operate, need to produce hot water and/or vapour, comprise a heating group, or boiler, which raises up to an appropriate value the temperature of a certain flow of water so as to produce vapour or hot drinks such as espresso, cappuccino, tea, chocolate and so on.

In accordance with an embodiment currently widespread on the reference market, the boiler includes a heat exchange container, suitable to contain the water to be heated, which houses inside heating means, typically a resistor component of the immersion type, so-called armoured or "cartridge", electrically connected with the electricity supply system.

The heating means transform electric energy into heat energy transferring it by conduction to the water present in the primary container from which they are separated by an inner dead air space.

The boiler in exam, also known as "single-stage heating groups", also comprise a pair of control thermostats adjusting the power of the heating means according to the degree of water heating that is desired to get.

Thus, for example in a coffee machine, in case it is desired to produce espresso, the power of the heating means is interrupted when the first thermostat detects that the water temperature reaches about 85-90°C, while in case it is desired to produce cappuccino the heating means are powered till the second thermostat detects a temperature inside the container of at least 140°C.

By law, the boilers in question also include a safety thermostat allowing to interrupt the power of the heating means in the event of malfunctions, related to an excessive increase in temperature inside the container, typically above 220°C.

Therefore, in the known boilers of this type the operation of the heating means is basically regulated by the thermostats, while the power spent to put into operation the heating means is always the same, typically in the order of 1.000-1.200 Watts in a coffee machine. This obviously causes a non-optimal and little efficient energy consumption, since the power needed to produce hot water at 90°C or vapour to at least 140°C are theoretically lower.

A boiler of another type currently available on the market remedies to this problem, by comprising a pair of heat exchange containers side by side each other, each of which provided with its own heating means, control thermostat and safety thermostat.

For example, document DE 20 2007 012762 U1 discloses a boiler having all the features of the preamble of the attached claim 1.

In a first heat exchange container hot water at a temperature of about 85-90°C is produced, for example to get espresso in a coffee machine, while the second heat exchange container is suitable to produce vapour being able to raise the temperature of the water up to more than 140°C.

In this way, the power supplied to the heating means of each of the heat exchange containers are those ones required to produce hot water from one side and vapour on the other side, however lower than that one spent in case of single-stage heating groups.

Indeed, in a coffee machine with "two stages" heating group (two separated containers), the power needed to produce hot water is around 400-500 Watts, while the power useful to produce vapour is about 800 Watts.

However, even this type of boilers for generating hot water and/or vapour presents some recognized drawbacks, which can be identified in the inevitable doubling of the equipment and components which in turn reflects in:
- increase in sizes and production time, as well as, in general, in production costs, the other factors concerned being equal;
- increase in risk of failures and, consequently, repair and/or replacement interventions, often to be performed even under warranty for the buyer and thus highly inconvenient for the manufacturer.

The drawback that the heat produced by the heating means operating at higher temperature is confined in the related heat exchange container and is exploited only from it in order to produce the vapour also accompanies these negative implications.

These drawbacks have been partly overcome by means of an economizer boiler of more recently conceiving, proposed on the market by the same company filing the present patent application.

Extremely briefly, the peculiarity of such a boiler consists in that the heating means include a first heat radiation device, placed at a first portion of the heat exchange container and suitable to heat the water at a first predefined temperature, and a second heat radiation device, communicating with the first radiation device, placed at a second portion of the heat exchange container suitable and suitable to heat the water at a second preset temperature lower than the first predefined temperature.

The result is thus a boiler which, while maintaining the mode of operation typical of a so-called "two stages" heating group able to diversify the electric power supplied to the heating means according to whether hot water or vapour should be produced, is more compact than the equivalent boilers of the previous known technique.

Furthermore, in such a boiler, the heat developed by one of two radiation devices in the related portion of the heat exchange container is partly conveyed to the other portion: this allows the second heat radiating device to spend less time or, the time being equal, to request a lower contribution of electric power in order to bring for instance water to the second temperature, since it exploits the heat yet eventually produced by the first heat radiation device with which the water reaches the first temperature.

Notwithstanding these advantages actually brought by the aforesaid boilers of more modern conception with respect to the related prior art, drawbacks still persist for them related both to their global encumbrance, which is still relevant and can be in any case further reduced, and mostly to the dispersion of a not negligible part of the heat produced by each of the heating bodies to produce hot water and/or vapour.

The need to make further more efficient the operation of the boilers here dealt with is widely felt in the field, especially in terms of saving of the electrical power absorbed by the heating means, keeping in any case reduced sizes and mass in the components used.

The present invention intends to solve the drawbacks of the known technique just complained.

In particular, primary purpose of the invention is to provide an economizer boiler for generating hot water and/or vapour which allows to recover at least part of the heat energy dissipated through the heat exchange container during normal operation.

As part of this purpose, it is a task of the present invention to give substance to an economizer boiler for generating hot water and/or vapour that presents a thermal efficiency better than the prior art boilers.

It is a second purpose of the current invention to design an economizer boiler for generating hot water and/or vapour that presents overall dimensions limited, and however reduced than equivalent boilers of known type.

It is another purpose of the present invention to create an economizer boiler for generating hot water and/or vapour having constructive concept simpler than the boilers of the prior art.

The aforesaid purposes are achieved by means of an economizer boiler for generating hot water and/or vapour as the attached claim 1, as hereinafter referred for the sake of brevity.

Other constructive features of detail of the economizer boiler of the invention are set forth in the corresponding dependent claims.

Advantageously, the economizer boiler according to the invention allows at least partial recovery of the heat energy dissipated by the primary container containing the heating means, assembly known in jargon as vapour group; this thanks to the fact that the vapour group provides heat, by radiation or conduction, to the water contained in the auxiliary tank from which it is thermally insulated.

Water, introduced into the auxiliary tank generally at room temperature, increases spontaneously its own temperature, since, in normal operation, the heating means are brought at a temperature of 140°C in order to produce vapour.

The water of the auxiliary tank is, therefore, pre-heated and reaches a temperature of at least 90°C which keeps during temporary operation periods (standby) of the boiler.

When necessary, the pre-heated water of the auxiliary tank is yet available to be directly broached to produce coffee or other hot beverages, without the need to absorb electrical power and activate the heating means, or to be conveyed to the inner dead air space, present between the primary container and heating means, which will undergo a further raising due to the activation of the heating means, thereby becoming vapour.

It is clear that, in this latter case, the jump in temperature which, in the boiler of the invention, must be applied to water, through the heating means, in order to produce vapour has a value of about 60-70°C, extremely lower then the traditional boilers where the temperature difference needed to produce vapour is typically equal to 110-120°C.

The practical consequence is that the boiler of the invention requires in the time unit a lower amount of electricity to produce the same amount of vapour of the boilers of known type, or the power supplied being equal, it takes less time than the known boilers to produce the same amount of vapour.

Still advantageously, therefore, the economizer boiler of the invention presents heat efficiency better than the current state of the art, this occurring without increasing the mass and sizes of the vapour group.

On the contrary, equally advantageously, the economizer boiler object of the present invention has very limited overall dimension, however lower than equivalent boilers of known type.

In an advantageous way, the economizer boiler claimed herein has a constructive concept simpler than boilers of equal functionality and use destination.

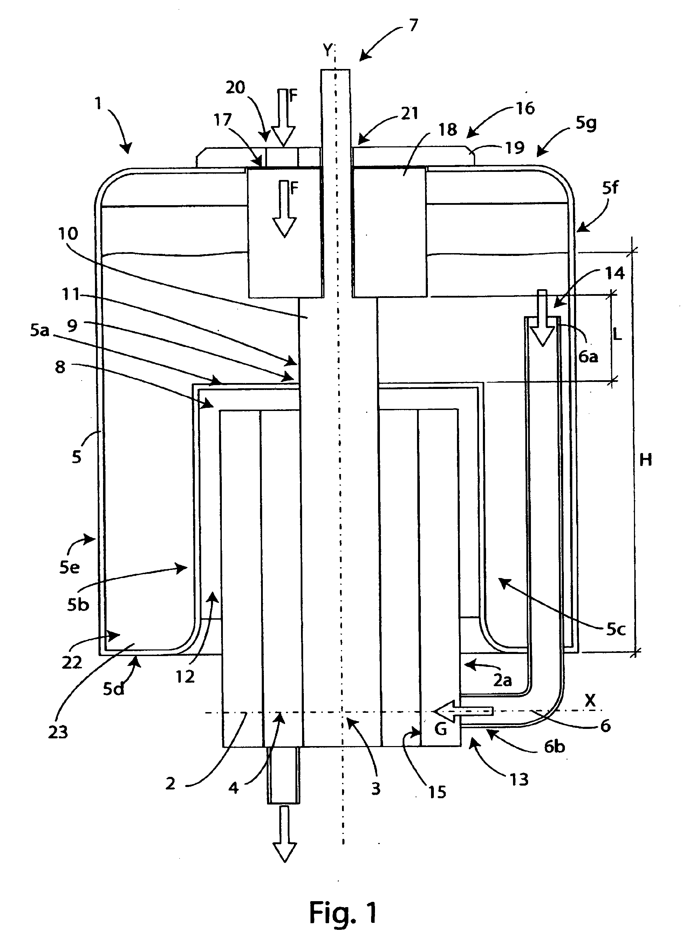

Said purposes and advantages, as well as others that will emerge later on, will appear to a greater extent from the following description, relating to a preferred embodiment of the economizer boiler of the invention given by exemplifying and illustrative, but not limited, way with reference to the attached drawing containing only the figure 1 which is a simplified view in longitudinal section of the boiler of the invention.

The economizer boiler of the invention, used for generating hot water and/or vapour, is represented in figure 1 where it is globally numbered with 1.

By way of preference, it is used in coffee machines, but this does not preclude the installation on other household or industrial appliances such as, for instance, irons or water kettles.

As it can be seen, the economizer boiler 1 comprises a primary container 2, suitable to contain inside water to be heated, and heating means, overall indicated with 3, in this case almost entirely contained into the primary container 2 in order to define an inner dead air space 4.

The heating means 3 are provided to be electrically connected with an electricity source, for example the power system of a building, and generate hot water and/or vapour.

According to the invention, the boiler 1 includes an auxiliary tank 5 partly filled with water A and partly surrounding the primary container 2 in order to recover the energy dissipated by the heating means 3 and heat the water A.

It should be noted that the water A preferably, although not in binding way, reaches the level indicated by H inside the container, starting from the outer edge 5d of the auxiliary tank 5.

Preferably but not necessarily, the boiler 1 also comprises a connecting pipe 6 providing communication between the inner volume of the auxiliary tank 5 and the inner dead air space 4 in order to convey the heated water A in contact with the heating means 3 into the primary container 2, where the heated water A is further overheated and/or converted into vapour.

It is understood that, in other embodiments of the invention, not shown, the economizer boiler may include more than one single connecting pipe between the auxiliary tank and the primary container, depending on construction choices.

The primary container 2 comprises a cylindrical body, for instance made of metallic material, while the heating means 3 include a resistor, of the type in itself known to the person skilled in the art, electrically connected with the electric energy source, for example the power system, through electrical terminals 7.

The resistor typically includes a cylindrical core around which a threadlike coil made of metallic material, for example iron, chromium and tungsten based alloy, is placed.

Figure 1 shows that the auxiliary tank 5 presents an axial seat 8 which houses, in the specific case partly, the primary container 2 and is delimited by a bottom 5a and tow inner side walls 5b, 5c opposite each other, each of which facing to and spaced apart from a outer side walls 5e, 5f of the auxiliary tank 5.

The auxiliary tank 5 presents in the bottom 5a a through hole 9 made at the longitudinal axis Y defined by the auxiliary tank 5.

According to the invention, the heating means 3 comprise a linear portion 10, preferably of length L, protruding from the primary container 2 according to the aforesaid longitudinal axis Y and inserted into the through hole 9 so as to be contained in the auxiliary tank 5 and externally licked by the water A.

It is understood that in further embodiments of the economizer boiler of the invention, not shown, the heating means may project from the primary container 2 in order to insert into the auxiliary tank of a length different from that one shown in figure 1: this depending on the quantity of heat which, at design level, it has been decided to transfer to the water of the auxiliary tank.

The auxiliary tank 5 is connected with the primary container 2 through junction means, as a whole indicated with 11 and applied to the outer surface of the cylindrical body of the heating means 3 and bottom 5a of the auxiliary tank 5 at the through hole 9.

Advantageously, the boiler 1 also comprises insulating means, generally indicated with 12, interposed between the auxiliary tank 5 and the primary container 2: in the specific case, purely by way of indication, the insulating means 12 include an annular air chamber, while being clear that in other embodiments of the invention, not represented, the insulating means suitable for the purpose may be of other types.

As far as the connecting pipe 6 is concerned, it is provided with a first end 6a, fixed inside the outer side wall 5f of the auxiliary tank 5, and a second end 6b inserted into a through opening 13 communicating with the inner dead air space 4 and made into the side wall 2a of the primary container 2.

Moreover, the connecting pipe 6 is provided with an inlet 14 facing the inner volume of the auxiliary tank 5 and an outlet 15 facing the inner dead air space 4.

More in detail, the through opening 13 defines a linear axis X perpendicular to the longitudinal axis Y.

According to the preferred embodiment described herein of the invention, the boiler 1 also comprises filtering means, overall numbered with 16 and removably arranged inside the auxiliary tank 5 at a through mouth 17 through which the water A is introduced into the auxiliary tank 5.

The filtering means 16 are intended to retain at least part of the limestone of the water A which is introduced into the auxiliary tank 5.

More precisely, the filtering means 16 are in the case at issue arranged at the longitudinal axis Y, above the linear portion 10 of the heating means 3 and partially submerged in the water A.

As it can be seen in figure 1, the filtering means 16 comprise a filtering body 18 contained in the auxiliary tank 5 in operating conditions, and a handle flange 19 available to the operator for introducing/removing the filtering means 16 into/from the auxiliary tank 5.

The handle flange 19 is arranged externally close to the base wall 5g of the auxiliary tank 5 and presents a perimetrical through opening 20, coaxial with the through mouth 17, as well as a central through opening 21 for the passage of the electrical terminals 7.

The through mouth 17 is made in the base wall 5g, monolithic with the outer side walls 5e, 5f, of the auxiliary tank 5.

Advantageously, the boiler 1 also comprises, by its natural structure, sedimentation means, as a whole reported with 22, defined in the auxiliary tank 5 and adapted to receive at least part of the limestone (about 60-70%) of the water A introduced into it.

The sedimentation means 22 include the inner surface 23 of the outer edge 5d belonging to the auxiliary tank 5, opposed to the wall base 5g and interposed between each of the outer side walls 5e, 5f and each of the inner side walls of 5b, 5c of the auxiliary tank 5.

The filtering means 16 and sedimentation means 22 allow to make purer the water A broached from the auxiliary tank 5 or conveyed to the inner dead air space 4 of the primary container 2.

In use, the producer, after having fixed the vapour group, complete with the primary container 2 and heating means 3, to the auxiliary tank 5 and applied the filtering means 16 to the auxiliary tank 5 itself, introduces the water A at a given temperature up to the level H in the auxiliary tank 5, as indicated by the arrow F in figure 1.

The operation of the vapour group involves a release of heat by the cylindrical body of the heating means which, in the boiler 1 of the invention, is transferred to the water A present inside the auxiliary tank 5 which then reaches in a given period of time a temperature of at least 90°C.

Such a water is thus immediately available for subsequent uses, as hot water in coffee machines or other hot-served beverages, without the necessity of activating the heating means 3, or as water transferred, through the connecting pipe 6 and as indicated by the arrow G in figure 1, to the inner dead air space 4 of the primary container 2, where it is transformed into vapour for making cappuccinos, in a period of time smaller than the known art, the electric power supplied to the heating means 3 being equal, or with a lower electric power absorption, the time spent for changing state being equal.

What just said is obtained by a construction of the boiler 1 rather simplified as far as the components are concerned and with very limited overall dimensions compared to the state of the art of the field.

By virtue of the foregoing, it is, therefore, understood that the economizer boiler for generating hot water and/or vapour of the invention achieves the purposes and reaches the advantages mentioned above.

In execution, changes could be made to the economizer boiler of the invention consisting, for instance, in an auxiliary tank having a different construction from that one shown in the attached figure.

Moreover, other embodiments of the economizer boiler here claimed, still not represented in the drawings that follow, could exist in which the auxiliary tank completely surrounds the primary container, which does not impair the advantages of the present invention.

In this case, then, the axial seat of the auxiliary tank will receive inside the primary container in its entirety.

In addition, in further practical embodiments of the economizer boiler of the invention, the auxiliary tank could be filled with water at room temperature up to a level which differs from that one indicated in the annexed figure and previously pointed out, without the same water interferes with the filtering means.

The economizer boiler of the invention will be operatively connected with a logic processing and control unit which will opportunely manage its operation.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Economizer boiler (1) for generating hot water and/or vapour comprising at least one primary container (2), suitable to contain inside water to be heated, and heating means (3), at least partially contained in said primary container (2) in order to define an inner dead air space (4), said heating means suitable to be electrically connected with an electricity source and generate said hot water and/or said vapour, said boiler (1) including an auxiliary tank (5) at least partially filled with water (A) and at least partially surrounding said primary container (2) in order to recover the energy dissipated by said heating means (3) and preheat said water (A), **characterized in that** said auxiliary tank (5) presents an axial seat (8) which houses at least partially said primary container (2) and is delimited by a bottom (5a) and two inner side walls (5b, 5c) opposite each other, each of which facing to and spaced apart from one of the outer side walls (5e, 5f) of said auxiliary tank (5), said bottom (5a) having a through hole (9) made at the longitudinal axis (Y) defined by the auxiliary tank (5), wherein said heating means (3) include a linear portion (10) protruding from said primary container (2) according to said longitudinal axis (Y) and inserted into said through hole (9) in order to be contained in said auxiliary tank (5) and externally licked by said water (A).

2. Boiler (1) as claimed in claim 1 **characterized in that** it comprises at least one connecting pipe (6) which places in communication the inner volume of said auxiliary tank (5) with said inner dead air space (4) in order to convey said heated water (A) in contact with said heating means (3) into said primary container (2) where said heated water (A) is overheated and/or converted into vapour.

3. Boiler (1) as claimed in any of the previous claims **characterized in that** said auxiliary tank (5) is connected with said primary container (2) through junction means (11).

4. Boiler (1) as claimed in any of the previous claims **characterized in that** it includes insulating means (12) interposed between said auxiliary tank (5) and said primary container (2).

5. Boiler (1) as claimed in any of the previous claims **characterized in that** said connecting pipe (6) is provided with a first end (6a), fixed inside one of said outer side walls (5e, 5f) of said auxiliary tank (5), and a second end (6b) inserted into a through opening (13) communicating with said inner dead air space (4) and made in the side wall (2a) of said primary container (2).

6. Boiler (1) as claimed in any of the previous claims **characterized in that** said connecting pipe (6) is provided with an inlet (14) facing said inner volume of said auxiliary tank (5) and an outlet (15) facing said inner dead air space (4).

7. Boiler (1) as claimed in any of the previous claims **characterized in that** it includes filtering means (16), removably arranged inside said auxiliary tank (5) at a through mouth (17) through which said water (A) is introduced into said auxiliary tank (5), suitable to retain at least part of the limestone of said water (A).

8. Boiler (1) as claimed in claim 7 **characterized in that** said filtering means (16) are arranged at said longitudinal axis (Y), above said linear portion (10) of said heating means (3) and partially submerged into said water (A).

9. Boiler (1) as claimed in claim 8 **characterized in that** said through mouth (17) is made in the base wall (5g), monolithic said outer side walls (5e, 5f), of said auxiliary tank (5).

10. Boiler (1) as claimed in any of the previous claims **characterized in that** said auxiliary tank (5) is provided with an inner surface (23) of an outer edge (5d), opposite to said base wall (5g) and interposed between each of said outer side walls (5e, 5f) and each of said inner side walls (5b, 5c) of the auxiliary tank (5), which is suitable to support at least part of the limestone of said water (A).

## Patentansprüche

1. Energiesparender Boiler (1) zur Erzeugung von heißem Wasser und/oder Dampf, umfassend mindestens einen Primärbehälter (2), der geeignet ist, zu heizendes Wasser innen zu enthalten, und Heizmittel (3), die mindestens teilweise in dem Primärbehälter (2) aufgenommen sind, um einen inneren Tot-Luftraum (4) zu definieren, wobei die Heizmittel geeignet sind, elektrisch mit einer Elektrizitätsquelle verbunden zu sein und das heiße Wasser und/oder den Dampf zu erzeugen, wobei der Boiler (1) einen Hilfstank (5) enthält, der mindestens teilweise mit Wasser (A) gefüllt ist und mindestens teilweise den Primärbehälter (2) umgibt, um die Wärme rückzugewinnen, die von den Heizmitteln (3) abgeführt wird, und das Wasser (A) vorzuheizen, **dadurch gekennzeichnet, dass** der Hilfstank (5) einen axialen Sitz (8) präsentiert, der mindestens teilweise den Primärbehälter (2) aufnimmt und durch einen Boden (5a) und zwei innere Seitenwände (5b, 5c) begrenzt ist, die einander gegenüberliegen, wobei jede von diesen gegenübersteht zu und beabstandet ist von einer von den äußeren Seitenwänden (5e, 5f) des Hilfstanks (5), wobei der Boden (5a) ein Durchgangsloch (9) aufweist, das an der longitudinalen Achse (Y) hergestellt ist, die durch den Hilfstank (5) definiert ist, wobei die Heizmittel (3) einen linearen Bereich (10) enthalten, der von dem Primärbehälter (2) entsprechend der longitudinalen Achse (Y) vorragt und in das Durchgangsloch (9) eingefügt ist, um in dem Hilfstank (5) aufgenommen zu sein und äußerlich durch das Wasser (A) benetzt zu werden.

2. Boiler (1) gemäß Anspruch 1, **dadurch gekennzeichnet, dass** er mindestens ein Verbindungsrohr (6) umfasst, welches das innere Volumen des Hilfstanks (5) mit dem inneren Tot-Luftraum (4) in Verbindung bringt, um das geheizte Wasser (A) in Kontakt mit den Heizmitteln (3) in den Primärbehälter (2) zu fördern, wo das geheizte Wasser (A) überhitzt und/oder in Dampf umgewandelt wird.

3. Boiler (1) gemäß einem der vorhergehenden Ansprüche, **dadurch gekennzeichnet, dass** der Hilfstank (5) durch Zusammenführungsmittel (11) mit den Primärbehälter (2) verbunden ist.

4. Boiler (1) gemäß einem der vorhergehenden Ansprüche, **dadurch gekennzeichnet, dass** er Isoliermittel (12) enthält, die zwischen dem Hilfstank (5) und dem Primärbehälter (2) eingefügt sind.

5. Boiler (1) gemäß einem der vorhergehenden Ansprüche, **dadurch gekennzeichnet, dass** das Verbindungsrohr (6) mit einem ersten Ende (6a), das innerhalb einer der äußeren Seitenwände (5e, 5f) des Hilfstanks (5) befestigt ist, und einem zweiten Ende (6b) versehen ist, das in eine Durchgangsöffnung (13) eingefügt ist, die mit dem inneren Tot-Luftraum (4) kommuniziert und in der Seitenwand (2a) des Primärbehälters (2) hergestellt ist.

6. Boiler (1) gemäß einem der vorhergehenden Ansprüche, **dadurch gekennzeichnet, dass** das Verbindungsrohr (6) mit einem Einlass (14), der dem inneren Volumen des Hilfstanks (5) gegenüberliegt, und einem Auslass (15) versehen ist, der dem inneren Tot-Luftraum (4) gegenüberliegt.

7. Boiler (1) gemäß einem der vorhergehenden Ansprüche, **dadurch gekennzeichnet, dass** er Filtermittel (16) enthält, die innerhalb des Hilfstanks (5) an einer Durchgangsmündung (17) entfernbar angeordnet sind, durch die das Wasser (A) in den Hilfstank (5) eingeführt wird, geeignet um mindestens einen Teil des Kalks des Wasser (A) zurückzuhalten.

8. Boiler (1) gemäß Anspruch 7, **dadurch gekennzeichnet, dass** die Filtermittel (16) an der longitudinalen Achse (Y) oberhalb des linearen Bereichs (10) der Heizmittel (3) und teilweise in das Wasser (A) eingetaucht angeordnet sind.

9. Boiler (1) gemäß Anspruch 8, **dadurch gekennzeichnet, dass** die Durchgangsmündung (17) in der Basiswand (5g), die monolithisch zu den äußeren Seitenwänden (5e, 5f) ist, des Hilfstanks (5) hergestellt ist.

10. Boiler (1) gemäß einem der vorhergehenden Ansprüche, **dadurch gekennzeichnet, dass** der Hilfstank (5) mit einer inneren Oberfläche (23) einer äußeren Kante (5d) versehen ist, die der Basiswand (5g) entgegengesetzt und zwischen jeder der äußeren Seitenwände (5e, 5f) und jeder der inneren Seitenwände (5b, 5c) des Hilfstanks (5) eingefügt ist, die geeignet ist, mindestens einen Teil des Kalks des Wassers (A) zu tragen.

## Revendications

1. Bouilloire à économiseur (1) pour générer de l'eau chaude et/ou de la vapeur, comprenant au moins un récipient primaire (2), approprié pour contenir à l'intérieur de l'eau devant être chauffée, et des moyens de chauffage (3), au moins partiellement contenus dans ledit récipient primaire (2) de façon à définir un espace d'air mort intérieur (4), lesdits moyens de chauffage étant susceptibles d'être électriquement connectés à une source d'électricité et à générer ladite eau chaude et/ou ladite vapeur, ladite chaudière (1) comprenant un réservoir auxiliaire (5) au moins partiellement rempli d'eau (A) et entourant au moins partiellement ledit récipient primaire (2) de façon à récupérer l'énergie dissipée à partir desdits moyens de chauffage (3) et à préchauffer ladite eau (A), **caractérisée en ce que** ledit réservoir auxiliaire (5) présente un siège axial (8) qui renferme au moins partiellement ledit récipient primaire (2) et qui est délimité par un fond (5a) et deux parois latérales intérieures (5b, 5c) opposées l'une à l'autre, dont chacune fait face à l'une des parois latérales extérieures (5e, 5f) dudit réservoir auxiliaire (5) et est mutuellement espacée vis-à-vis de celle-ci, ledit fond (5a) comportant un trou traversant (9) réalisé au niveau de l'axe longitudinal (Y) défini par le réservoir auxiliaire (5), dans laquelle lesdits moyens de chauffage (3) comprennent une partie linéaire (10) faisant saillie à partir dudit récipient primaire (2) selon ledit axe longitudinal (Y) et insérée dans ledit trou traversant (9) afin d'être contenue dans ledit réservoir auxiliaire (5) et effleurée extérieurement par ladite eau (A).

2. Bouilloire (1) selon la revendication 1, **caractérisée en ce qu'**elle comprend au moins un tuyau de liaison (6) qui met en communication le volume intérieur dudit réservoir auxiliaire (5) avec ledit espace d'air mort intérieur (4) de façon à convoyer ladite eau chauffée (A) en contact avec lesdits moyens de chauffage (3) dans ledit récipient primaire (2), où ladite eau chauffée (A) est surchauffée et/ou convertie en vapeur.

3. Bouilloire (1) selon l'une quelconque des revendications précédentes, **caractérisée en ce que** ledit réservoir auxiliaire (5) est relié audit récipient primaire (2) par l'intermédiaire de moyens de jonction (11).

4. Bouilloire (1) selon l'une quelconque des revendications précédentes, **caractérisée en ce qu'**elle comprend des moyens d'isolation (12) interposés entre ledit réservoir auxiliaire (5) et ledit récipient primaire (2).

5. Bouilloire (1) selon l'une quelconque des revendications précédentes, **caractérisée en ce que** ledit tuyau de liaison (6) est muni d'une première extrémité (6a), fixée à l'intérieur de l'une desdites parois latérales extérieures (5e, 5f) dudit réservoir auxiliaire (5), et d'une deuxième extrémité (6b) insérée dans une ouverture traversante (13) communiquant avec ledit espace d'air mort intérieur (4) et réalisée dans la paroi latérale (2a) dudit récipient primaire (2).

6. Bouilloire (1) selon l'une quelconque des revendications précédentes, **caractérisée en ce que** ledit tuyau de liaison (6) est muni d'une entrée (14) faisant face au volume intérieur dudit réservoir auxiliaire (5) et d'une sortie (15) faisant face audit espace d'air mort intérieur (4).

7. Bouilloire (1) selon l'une quelconque des revendications précédentes, **caractérisée en ce qu'**elle comprend des moyens de filtrage (16), disposés de façon amovible à l'intérieur dudit réservoir auxiliaire (5) au niveau d'une embouchure traversante (17) à travers laquelle ladite eau (A) est introduite dans ledit réservoir auxiliaire (5), appropriés pour retenir au moins une partie du calcaire de ladite eau (A).

8. Bouilloire (1) selon la revendication 7, **caractérisée en ce que** lesdits moyens de filtrage (16) sont agencés au niveau dudit axe longitudinal (Y), au-dessus de ladite partie linéaire (10) desdits moyens de chauffage (3), et partiellement submergés dans ladite eau (A).

9. Bouilloire (1) selon la revendication 8, **caractérisée en ce que** ladite embouchure traversante (17) est réalisée dans la paroi de base (5g), monolithique avec lesdites parois latérales extérieures (5e, 5f), dudit réservoir auxiliaire (5).

10. Bouilloire (1) selon l'une quelconque des revendications précédentes, **caractérisée en ce que** ledit réservoir auxiliaire (5) est muni d'une surface intérieure (23) d'un bord extérieur (5d), opposée à ladite paroi de base (5g) et interposée entre chacune desdites parois latérales extérieures (5e, 5f) et chacune desdites parois latérales intérieures (5b, 5c) du réservoir auxiliaire (5), celle-ci étant appropriée pour supporter au moins une partie du calcaire de ladite eau (A).
